(19) Europäisches Patentamt
European Patent Office
Office européen des brevets

(11) **EP 2 899 242 A1**

(12) **EUROPÄISCHE PATENTANMELDUNG**

(43) Veröffentlichungstag:
**29.07.2015  Patentblatt 2015/31**

(51) Int Cl.:
*C09D 15/00* [(2006.01)]   *B27K 3/16* [(2006.01)]
*B27K 3/26* [(2006.01)]   *B27K 3/52* [(2006.01)]
*B27K 5/02* [(2006.01)]

(21) Anmeldenummer: **15152608.4**

(22) Anmeldetag: **27.01.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **27.01.2014   DE 102014100864**

(71) Anmelder: **Georg-August-Universität Göttingen Stiftung Öffentlichen Rechts**
**37073 Göttingen (DE)**

(72) Erfinder:
• **Mai, Carsten**
**37077 Göttingen (DE)**
• **Kielmann, Bodo Caspar**
**37085 Göttingen (DE)**

(74) Vertreter: **Kröncke, Rolf et al**
**Gramm, Lins & Partner**
**Patent- und Rechtsanwaltssozietät GbR**
**Freundallee 13a**
**30173 Hannover (DE)**

(54) **Färbung von Holz und Holzwerkstoffen sowie entsprechendes Holz und Holzwerkstoffe**

(57)   Die vorliegende Erfindung betrifft in einem ersten Aspekt die Verwendung von Metallionen zur Färbung von Holz und Holzwerkstoffen. Genauer betrifft sie die Verwendung von Metallionen in Verbindung mit einem Harz mit einer Arylgruppe aufweisende Komponente, insbesondere einem Phenol-Formaldehyd-Harz. Weiterhin betrifft die vorliegende Erfindung Verfahren zum Einfärben von Holz und Holzwerkstoffen, wobei das Holz oder die Holzwerkstoffe mit Metallionen und ggf. Harz behandelt verwendet werden. Schließlich wird ein so hergestelltes Holz oder ein so hergestellter Holzwerkstoff bereitgestellt sowie Färbemittel für Holz und Holzwerkstoffe umfassend Metallionen und Harz.

**Abbildung 4:**   Ausgleichsfeuchte (EMC; equilibrium moisture content) unbehandelter und modifizierter Hölzer PF-Fe³+ and PF-Tannin-Fe³+) bei verschiedenen relativen Luftfeuchten (relative humidity); a. Buche, b. Kiefer

EP 2 899 242 A1

**Beschreibung**

Die vorliegende Erfindung betrifft in einem ersten Aspekt die Verwendung von Metallionen zur Färbung von Holz und Holzwerkstoffen. Genauer betrifft sie die Verwendung von Metallionen in Verbindung mit einem Harz mit einer Arylgruppe aufweisende Komponente, insbesondere einem Phenol-Formaldehyd-Harz. Weiterhin betrifft die vorliegende Erfindung Verfahren zum Einfärben von Holz und Holzwerkstoffen, wobei das Holz oder die Holzwerkstoffe mit Metallionen und Harz behandelt werden. Schließlich wird ein so hergestelltes Holz oder ein so hergestellter Holzwerkstoff bereitgestellt sowie Färbemittel für Holz und Holzwerkstoffe umfassend Metallionen und Harz.

Stand der Technik

Holz ist einer der ältesten Werkstoffe und wird sowohl im Innen- als auch Außenbereich in verschiedenster Art und Weise eingesetzt. Holz findet Anwendung bei Möbeln, Böden, im Bau usw. Durch seine chemischen und physikalischen Eigenschaften, wie unterschiedliche Dichte, Farben, Festigkeit und Dimensionen, wird Holz noch immer gegenüber anderen Materialien wie z.B. Metall, Beton oder Kunststoff, bevorzugt. Insbesondere aufgrund seiner optisch-haptischen Eigenschaften findet Holz gegenüber den anderen Materialien Vorzug. Holz ist weiterhin ein regenerativer Rohstoff, wird also aus ökologischen Aspekten ebenfalls bevorzugt. Holz bzw. Holzwerkstoffe haben aber auch Nachteile: Holz und Holzwerkstoffe weisen eine begrenzte Lebensdauer auf, wenn sie nicht einer Behandlung unterworfen werden. Holz ist durch Mikroorganismen angreif- und abbaubar. UV-Strahlung der Sonne sorgt für eine Veränderung der Holz- und Holzwerkstoffbestandteile, was zu einem Verfärben, Ausdunsten von ungewünschten Bestandteilen und eine Veränderung der chemischen und physikalischen Eigenschaften des Holzes führt. Feuchtigkeit verändert die Dimensionsstabilität und ermöglicht den Angriff durch Holz abbauende Pilze und Bakterien. Die periodische Aufnahme von Feuchtigkeit und das anschließende Abtrocknen führen zu einer Quell-Schwindbewegung, die über einen längeren Zeitraum eine Rissbildung und Verformung des Holzes zu Folge hat. Insbesondere Massiv- und Sperrholz, das im Außenbereich angewendet wird, unterliegt einer Beanspruchung durch Bewitterung und biologischen Befall.

Holz und Holzwerkstoffe werden chemischen und physikalischen Modifikationen unterworfen, um die Lebensdauer des Holzes und/oder der Holzwerkstoffe zu erhöhen und um Schäden zu minimieren. Hierzu sind beispielhaft die Acetylierung oder Veretherung genannt. Auch der Einsatz bestimmter Harze, und hier insbesondere Phenol-Formaldehyd-Harze (PF-Harze), ist in der Literatur beschrieben. PF-Harze können in niedrigmolekularer Form zur imprägnierenden Behandlung von Holz eingesetzt werden. Bei genügend kleinen Molekülmassen dringen die PF-Vorkondensate in die Zellwände des Holzes ein und bewirken eine Verbesserung chemischer und physikalischer Eigenschaften (verminderte Feuchtesorption und erhöhte Dimensionsstabilität) von sowohl Holz als auch Holzwerkstoffen. Bei den Holzwerkstoffen können PF-Harze sowohl in niedrigmolekularer Form zur Imprägnierung von Furnieren, Spänen, Fasern und Strands als auch in höhermolekularer Form als Klebstoffe für die Herstellung von Sperrholz, Span- und Faserplatten sowie von "Oriented Strandboards" (OSB) und "Unoriented Strandbords" (USB) eingesetzt werden. Auch bei Massivholzprodukten (z.B. Brettschichtholz) werden höhermolekulare PF-Harze zur Verklebung eingesetzt. PF-Harze verändern die Holzfarbe nur geringfügig und bei direkter Bewitterung entsteht eine nichtgewünschte Verfärbung, meist Verdunkelung, des Holzes oder der Holzwerkstoffe

Es besteht aber durchaus der Wunsch, Holz bei der Behandlung zu färben, z.B. dunkel zu färben, um Holzfarben gemäß den Wünschen des Marktes anbieten zu können. Ein Färben von Holz und Holzwerkstoffen kann auch gewünscht sein, um höherwertige Holzarten zu ersetzen. D.h., durch Färbung kann Holz veredelt werden, um Edelhölzer zu ersetzen, z.B. Teakholz, Mahagoni, Ebenholz usw.

In der Literatur sind verschiedene Methoden zum Färben von Holz beschrieben. Z.B. werden organische Farbstoffe zugesetzt, die UV-stabil sind. Nachteile solcher organischen Farbstoffe sind aber deren hoher Preis und aufwendige Handhabung.

Es ist daher erstrebenswert, Verfahren zum Einfärben von Holzprodukten bereitzustellen, um eine gewünschte Färbung dieser Holzprodukte zu erreichen. Aufgabe der vorliegenden Erfindung ist die Bereitstellung entsprechender Verfahren und die Verwendung geeigneter Mittel zum Einfärben von Holz sowie die bereits schon entsprechend modifizierter Holzprodukte einschließlich Holz und Holzwerkstoffen.

Die gestellte Aufgabe wird durch die Verwendung von mindestens einem Metallion zur Färbung von Holz oder Holzwerkstoffen gemäß dem Merkmal des Anspruchs 1 gelöst. Ansprüche 2 bis 11 stellen bevorzugte Ausführungsformen hiervon bereit. Weiterhin werden Verfahren zur Färbung von Holz oder Holzwerkstoffen bereitgestellt sowie entsprechend erhältliche Holzprodukte einschließlich Holz und Holzwerkstoffen sowie Färbemittel für Holzprodukte einschließlich Holz und Holzwerkstoffen.

In einem ersten Aspekt wird erfindungsgemäß die Verwendung von Metallionen, d.h. mindestens einem Metallion, zur Färbung von Holzprodukten einschließlich Holz und Holzwerkstoffen bereitgestellt.

Der Ausdruck "Holzprodukt" schließt dabei üblicherweise Holz und Holzwerkstoffe ein. Diese Holzprodukte können dabei vorab oder anschließend weiter modifiziert werden.

Die Ausdrücke "umfassend" oder "enthaltend" schließen Ausführungsformen mit "bestehend aus" ein.

Soweit nicht anders ausgeführt, umfassen alle Ausdrücke die Ein- und Mehrzahl hiervon.

Der Ausdruck "mindestens ein Metallion" wie hierin ausgeführt, bezieht sich auf die Ausführungsform, bei der eine Art von Metallionen verwendet wird. Die Ausdrücke "mindestens ein Metallion" und "Metallionen" werden synonym verwendet. Es ist klar, dass verschiedene Arten von Metallionen verwendet werden können. Der Ausdruck "Metallion" schließt ein, dass das Metallion in verschiedenen Oxidationsstufen vorliegen kann. Z.B. können Eisenionen als Eisen II- oder Eisen III-Ionen vorliegen. Es können sowohl reine Eisen II- oder Eisen III-Ionen eingesetzt werden als auch Mischungen von Eisen II und Eisen III-Ionen.

"Metallionen" wie vorliegend verwendet bezieht sich auf solche Ausführungsformen, wo diese Metalle in Form von löslichen Verbindungen, insbesondere löslichen Salzen vorliegen. Metallionen schließt keine Pigmente ein, also farbgebende Substanzen, die im Gegensatz zu Farbstoffen, im Anwendungsmedium unlöslich sind. Pigmente unterscheiden sich somit von Farbstoffen, die im Anwendungsmedium löslich sind.

Die Metallionen werden in Verbindung mit einem Harz mit einer Arylgruppe aufweisende Komponente, insbesondere mit einer Phenolgruppe aufweisenden Komponente, eingesetzt. Es wurde festgestellt, dass bei Behandlung mit Metallionen in Verbindung mit einem Harz, das als Komponente einem Aromat aufweist, insbesondere einem Harz mit Phenolbestandteilen, ein Verfärben des Holzes oder der Holzprodukte möglich ist. Es zeigte sich, dass die Ausbildung von entsprechenden Komplexen durch Einbindung der Metallionen in Arylgruppen aufweisende Verbindungen, ein Färben erlaubt. Durch den Einsatz ausgewählter Metallionen ist eine gewünschte Verfärbung möglich. So zeigte sich, dass bei Einsatz von Eisen III-Salzen eine dunkle Färbung erreicht wird, gleiches wird auch mit Eisen II-Salzen erreicht. Insbesondere geeignete Salze sind ebenfalls Mangansalze, wie Mangan II-Salze, Mn III-Salze, Mn IV-Salze, Mn VI-Salze und Mn VII-Salze. Ebenfalls geeignete Metallsalze schließen Nickelsalze ein, wie Ni II-Salze; Kobaltsalze, wie Co II- und Co III-Salze, Kupfersalze, wie Cu II- oder Cu I-Salze. In einer Ausführungsform wird Eisen (III)-Nitrat verwendet. Dieses kann zusätzlich als Korrosionsinhibitor eingesetzt werden.

Die Metallionen werden dabei bevorzugt als Salze zugefügt. Übliche Salze können eingesetzt werden, insbesondere Halogensalze, Sulfat- oder Nitratsalze, wie sie einfach und kostengünstig erhältlich sind.

Es handelt sich bei den Metallsalzen um lösliche, insbesondere wasserlösliche Salze. Dem Fachmann sind entsprechend geeignete Salze bekannt.

Wie ausgeführt, werden die Metallionen in einer Ausführungsform in Verbindung mit einem Harz mit einer Aryl-Gruppe aufweisenden Komponente verwendet. Geeignete Harze sind insbesondere ein phenolhaltiges Harz, ein resorcinhaltiges Harz, ein Phenol-melaminhaltiges Harz, ein Harnstoff-Melaminphenolhaltiges Harz, ein tanninhaltiges Harz, ein ligninhaltiges Harz oder Mischungen hiervon. In einer Ausführungsform wird eines oder mehrere der hier genannten Harze mit nicht-Aryl-haltigen Harzen kombiniert, wie z.B. einem melaminhaltigen Harz, einem Harnstoff-Melamin-Harz oder furanhaltigen Harz. In einer Ausführungsform handelt es sich dabei um ein Phenol-Formaldehyd-Harz (PF-Harz). Andere Ausführungsformen sind ein Tannin-Formaldehydharz, ein PF-Harz mit Melamin, ein PF-Harz mit Tannin, ein PF-Harz mit Furanharz.

Eine Zugabe von monomeren oder oligomeren phenolischen Verbindungen zu den Harzen, wie den PF-Harzen kann weiterhin die Sprödigkeit der kondensierten Harze reduzieren.

Zur Verstärkung der Färbung können weitere monomere oder oligomere phenolische Verbindungen eingesetzt werden, wie z.B. Hydroxyzimtsäuren. Brenzcatechin, Hydrochinon, Resorcin, verschiedene Dihydroxybenzoesäuren, Pyrogallol, Vanillin, Vanillinsäure, Vanillinalkohol, Guaiacol, Gallussäure, Ellagsäure (und Hydrolyseprodukte des Tannins).

Üblicherweise werden die Metallionen ggf. in Kombination mit dem Harz in Form einer Lösung, insbesondere einer wässrigen Lösung, eingesetzt. In einer Ausführungsform werden somit wässrige Lösung des Harzes mit dem Metallsalz hergestellt und diese dann mit geeigneten Verfahren auf oder in das Holzprodukt eingetragen.

Unter dem Ausdruck wässrige Lösung fallen Wasser-enthaltende Lösungen. Üblicherweise ist Wasser dabei der wesentliche Bestandteil, liegt also in einer Menge von 50 Vol.-% und mehr vor. Weitere Bestandteile können insbesondere organische Lösungsmittel sein, wie Alkohole, z.B. Ethanol, Methanol oder Glykol. Weiterhin kann gleichzeitig oder alleine Alkali hinzugefügt werden, wie NaOH, KOH, $NH_4OH$. Der pH-Wert wird dabei bevorzugt auf einen leicht alkalischen Wert eingestellt, wie in einem Bereich von pH 7,5 bis 10, z.B. 7,8 bis 9, wie pH 8 bis 8,5.

Das Metallsalz kann dabei bezogen auf den Feststoff des Harzes in einer Menge von maximal 5 Gew.-% verwendet werden, in einigen Ausführungsformen handelt es sich dabei um solche mit einer maximalen Menge an Metallsalz von 3 Gew.-% oder weniger bezogen auf den Feststoff des Harzes, wie maximal 2 %, z.B. maximal 1 Gew.-% bezogen auf den Feststoff des Harzes.

Es wird davon ausgegangen, dass die Färbung auf der Ausbildung eines Komplexes zwischen den Metallionen und der Arylgruppe, wie insbesondere der Phenolgruppe, wie die Phenolationen hervorgerufen wird. Entsprechende Arylgruppen bzw. zur Komplexausbildung geeignete Gruppen sind dem Fachmann bekannt. Durch den Einsatz der Metallionen in Verbindung mit dem Harz sind günstigere Verfahren zur Färbung von Holzprodukten möglich. Diese sind UV-stabil und aufgrund der Komplexausbildung auch gegenüber Bewitterung stabil. Darüber hinaus schützt der ausgebildete Komplex nach der Behandlung das darunter liegende Holz besser als organische Farbstoffe. Dabei bleiben die vorteilhaften Dimensionsstabilitäten durch die Arylharze erhalten, zusätzlich ist die Färbung der Holzprodukte möglich. Ein weiterer Vorteil dieser Färbung ist eine gute Pilzresistenz.

Die Metallsalze werden aufgrund der Bildung von Komplexen auch nicht ausgewaschen, wie es z.B. bei Pigmenten geschehen kann.

In einer Ausführungsform wird das Metallsalz, insbesondere ein Eisen II- und/oder Eisen III Salz in Kombination mit einem PF-Harz verwendet. Es zeigte sich, dass hierbei stabile Komplexe ausgebildet werden, die ein Färben von Holzprodukten, insbesondere Holz und Holzwerkstoffen, erlaubt.

Wie ausgeführt, kann erfindungsgemäß das Metallion in Kombination mit einem Harz eingesetzt werden. Hierbei können das Metall und das Harz gleichzeitig, getrennt oder nacheinander aufgebracht oder in das Holz eingebracht werden oder auf und oder in den Holzwerkstoff eingebracht werden.

Dem Fachmann sind geeignete Verfahren zum Auf- bzw. Einbringen der Komponenten bekannt.

Ggf. kann dem Harz mit einer Arylgruppe aufweisenden Komponenten oder Kombinationen davon, weiterhin andere Harze, die keine Arylgruppe aufweisen, wie Melamin- oder Furanharze (aus Furfurylalkohol), und/oder Tannin, zugemischt sein. Dieses erlaubt eine verbesserte Ausbildung von Komplexen z.B. bei Kombination mit Melamin- oder Furanharzen. Tannin besitzt weitere vorteilhafte Eigenschaften in Bezug auf die Freisetzung von Bestandteilen des Harzes und des Holzproduktes insgesamt.

In einer Ausführungsform kann das Metallion z.B. in Form eines Metallsalzes, einer Lösung, wie einer wässrigen Metallsalzlösung in das Holz und/oder den Holzwerkstoff eingebracht werden. Hierbei findet eine Komplexbildung des Metallions mit im Holz oder Holzwerkstoff bereits vorliegenden geeigneten aromatischen Bestandteilen, insbesondere Phenolationen statt.

Es zeigte sich, dass in einer Ausführungsform das Holzprodukt mit einer reinen Harzlösung imprägniert werden kann und anschließend eine Metallsalzlösung, z.B. ein Eisensalz, z.B. als 0,1 %ige bis 3 %ige Metallsalzlösung aufgebracht wird. Die Harzlösung kann dabei in das Holzprodukt, z.B. einem Vollholz, imprägniert werden und anschließend wird die Metallsalzlösung durch Bestreichen aufgebracht. Das Holzprodukt wird daraufhin getrocknet und das eingebrachte Harz ausgehärtet. Hierbei werden entsprechende Harzmetallkomplexe, z.B. Phenolmetallkomplexe mindestens an der Oberfläche des Holzproduktes ausgebildet. Dieses eignet sich insbesondere dann, wenn keine weitere Oberflächenbehandlung des Holzproduktes vorgesehen ist. Bei Entfernung der verfärbten Oberfläche des Holzproduktes kann die natürliche Färbung des Holzes bzw. die Färbung des rein mit PF-behandelten Holzes wieder hervorgeholt werden.

In einer anderen, bevorzugten Ausführungsform beinhaltet die Behandlung des Holzproduktes ein Aufbringen einer Kombination von Harz und Metallsalz z.B. durch Aufstreichen oder durch Eintauchen in eine entsprechende Lösung. Anschließend findet eine Aushärtung des Harzes z.B. durch Heißlufttrocknung, Infrarottrocknung oder durch Heißpressen (Kontakttrocknung) statt.

Hier findet ebenfalls eine Oberflächenverfärbung des Holzprodukts statt.

In einer weiteren bevorzugten Ausführungsform findet eine komplette Durchfärbung des Holzproduktes statt. Dieses kann durch Imprägnieren des Holzprodukts mit dem Harz und den Metallionen z.B. in Form einer Metallsalzlösung erfolgen. Hierbei kann ein gleichzeitiges, getrenntes oder nacheinander Imprägnieren erfolgen. Anschließend wird das eingebrachte Harz ausgehärtet, um eine Durchfärbung des Holzes zu erreichen.

Erfindungsgemäß wird somit ein Verfahren zur Färbung von Holzprodukten, wie Holz oder Holzwerkstoffen, bereitgestellt, umfassend den Schritt des Ein- und/oder Aufbringens von Metallionen in und/oder auf das Holzprodukt, wie Holz oder Holzwerkstoffe und, bei Holzwerkstoffen gegebenenfalls zusätzlich zur Färbung des Klebstoffs oder Bindemittel.

Das Verfahren kann dabei zusätzlich das Aufbringen des Harzes in oder auf das Holzprodukt umfassen.

Das erfindungsgemäße Verfahren kann dabei durch Vakuumtränkung, Drucktränkung, Vakuum-Drucktränkung (Kesseldruckimprägnierung), Tauchtränkung, Sprühen, Fluten, Streichen und/oder Spritzen erfolgen. Die Verfahren können auch gleichzeitig eingesetzt werden.

Beim erfindungsgemäßen Verfahren der Einfärbung von Klebstoffen werden die in der Holzwerkstoffindustrie üblichen Verfahren der Klebstoffaufbringung angewendet.

Erfindungsgemäß umfasst das Verfahren weiterhin in allen Ausführungsformen ein Aushärten des eingebrachten Harzes. Ein solches Aushärten findet bei einer Temperatur bis 240° Celsius statt, bevorzugt bis 150° Celsius statt, insbesondere um ein Verbrennen des Holzes zu vermeiden. Bevorzugt findet ein Aushärten bei 100° Celsius bis 120° Celsius statt. Erfindungsgemäß kann das vorliegende Verfahren und die erfindungsgemäße Verwendung mit bekannten Thermoverfahren kombiniert werden. Dieses so erhaltene Thermoholz zeichnet sich durch eine geringere Vergrauung, geringere Sprödigkeit und Farbständigkeit aus. Weiterhin kann auch bei diesem Holz die Färbung entsprechend erfindungsgemäß bestimmt werden.

Bei dem zu behandelnden Holz handelt es sich um ein Holzprodukt einschließlich Holz (Vollholz bzw. Massivholz) oder ein Holzwerkstoff. Unter Holzwerkstoffe fallen übliche Sperrhölzer, Spanplatten, OSB-Platten oder Faserplatten. Dabei werden erfindungsgemäß die Metallionen ggf. in Kombination mit dem Harz bei der Herstellung der Holzwerkstoffe eingebracht. Das Aufbringen kann dabei durch Vermischen der Bestandteile Metallsalz und Harz erfolgen, alternativ kann ein Aufbringen der Bestandteile getrennt oder nacheinander erfolgen. Bei Holzwerkstoffen können die Bestandteile in entsprechender bekannter Art und Weise als Reste oder, als fester Bestandteil auf die Holz-Zerkleinerungsprodukte aufgebracht werden. Dann werden diese so bearbeiteten Holz-Zerkleinerungsprodukte mit Harz und Metallsalz und ggf. weiteren Klebstoffen anschließend verpresst, um entsprechend gefärbte Holzwerkstoffe zu erhalten.

Im Falle von Holzwerkstoffen kann die Holzkomponente vor der Verklebung behandelt werden. Bei Furnieren kann die Behandlung mit dem Harz und den Metallionen z.B. in Form einer Metallsalzlösung ähnlich der von Massivholz durch Aufstreichen, Aufsprühen, Tauchen oder Imprägnieren erfolgen. Bei Spänen, Fasern und Strands sind z.B. Aufsprühen, Tauchen oder Imprägnieren möglich. Die Aushärtung des Harzes kann in mehreren Ausführungsformen erfolgen. Einerseits können die behandelten Furniere, Spänen, Fasern und Strands direkt thermisch ausgehärtet werden.

In einer anderen Ausführungsform werden die behandelten nicht-ausgehärteten Furniere, Spänen, Fasern und Strands direkt mit einem Klebstoff beaufschlagt und heiß verpresst. Hierbei kommt es sowohl zur Aushärtung des eingebrachten niedrigmolekularem Harz, das zusammen mit Metallionen zur Färbung dient, als auch zur Aushärtung des höhermolekularen Klebharzes.

Niedrigmolekulare Harze sind dem Fachmann bekannt, es handelt sich z.B. um solche mit max. 1000g/mol, wie max. 800g/mol.

Die Einfärbung der Holzprodukte, insbesondere der Holzwerkstoffe, kann dabei unabhängig von eingesetzten Klebstoffen erfolgen. So kann zum Einfärben ein PF-Harz verwendet werden, während zum Verbinden ein anderer Klebstoff eingesetzt wird.

In einer weiteren Ausführungsform handelt es sich bei den höhermolekularen Klebharzen um Kombinationen von Harzen, die eine Arylgruppe aufweisen, und Metallionen im Sinne der vorliegenden Erfindung.

Somit kann sowohl die Holzkomponente des Holzwerkstoffes als auch der Klebstoff im Sinne der Erfindung eingefärbt werden. Gegebenenfalls werden dabei verschiedene Arylgruppen-aufweisende Harze eingesetzt.

Es zeigte sich, dass erfindungsgemäß durch Einsatz von Metallsalzen, wie Eisensalzen (sowohl Fe II als auch Fe III Salzen) eine Verdunkelung des Holzes möglich ist. Gleiches zeigte sich bei Verwendung von Mn II- und Mn III-Salzen, die eine braun/schwarze Färbung vom hellen Holz erlauben. Bei Zusatz von Nickelsalzen, z.B. Ni II-Salzen kann eine Gelbfärbung beobachtet werden, währen z.B. Kobaltsalze oder Kupfersalze einen rötlichen Ton und eine rötliche Färbung erlauben.

In Abhängigkeit von der Menge des eingesetzten Metallions kann die Intensität der Färbung gesteuert werden.

Erfindungsgemäß wird weiterhin ein Färbemittel für Holz oder Holzwerkstoffen bereit gestellt, umfassend Metallionen, wie vorliegend definiert, und Harze, wie vorliegend definiert, zur Verwendung bei der Einfärbung von Holzprodukte insbesondere Holz und Holzwerkstoffen. Die Metallionen sind dabei keine Katalysatoren zur Steuerung der Polymerisation des Harzes, vielmehr dienen diese Metallionen zur Einfärbung des Holzes. Weiterhin sind die Metallionen und eingesetzte Metallsalze keine Bestandteile von üblichen Oxidationsprodukten. Vielmehr ist es z.B. in einer Ausführungsform gewünscht, dass kein Oxidationsmittel, wie z.B. Wasserstoffperoxid, zugesetzt werden.

Weiterhin betrifft die vorliegende Erfindung Holzprodukte, wie Holz oder Holzwerkstoffe, herstellbar gemäß dem erfindungsgemäßen Verfahren wie z.B. unter der erfindungsgemäßen Verwendung der Metallionen, z.B. in Form von Metallsalzen, zur Färbung von Holzprodukten. Bei solchem Holz oder Holzwerkstoffen findet insbesondere eine Einfärbung in Teilbereichen statt, z.B. bei Holzwerkstoffen eine Einfärbung der Deckschicht, während die Mittelschichten nicht eingefärbt werden. Alternativ findet eine vollständige Färbung des Holzwerkstoffes statt. Die Einfärbung kann durch eine imprägnierende Behandlung mit niedrigmolekularen Harzen, als auch durch Verwendung höhermolekularer Klebharze, insbesondere von PF-Harzen, oder in Kombination der Harze mit Arylgruppen mit anderen geeigneten Harzen wie sie üblicherweise als Klebstoffe bei Holzwerkstoffen verwendet werden, mit Metallsalzen erfolgen. Dies erspart zusätzlich Kosten und ist im Herstellungsprozess einfach integrierbar.

Weiterhin wird erfindungsgemäß Massivholz bzw. Vollholz bereit gestellt, mit entsprechender Imprägnierung und Färbung. Diese Färbung kann dabei durchgehend sein oder auf die Oberfläche des Holzes beschränkt sein.

Erfindungsgemäß hergestellte Holzprodukte finden in verschiedensten Bereichen Anwendung. Insbesondere geeignete Anwendungsbereiche sind Außenbereiche z.B. bewitterte Außenbereiche, wie Fassaden, Terrassen, Schiffsdecks, Gartenmöbel usw. Aber auch in Feuchträumen, wie Küchen, Badezimmer oder anderen Bereichen, z.B. Schwimmbad, Sauna oder anderen Wellnessbereichen, finden erfindungsgemäß hergestellte Holzprodukte Anwendung.

Die Erfindung wird im Folgenden anhand eines Beispiels näher erläutert, ohne darauf beschränkt zu sein.

Beispiel 1:

**Verfärbung verschiedener Holzarten mit PF-Harz unter Eisenzugabe und künstliche Bewitterung**

Holzbrettchen der Holzarten Kiefer und Buche wurden mit 25%iger Phenolharzlösung mit Eisen-Salzlösung (1,0% Fe(II)-sulfat heptahydrat) (Mw ca. 400 bis 600 g/mol. P554, Surfactor, Schöppenstedt) mittels einer Vakuum-DruckTränkung behandelt und anschließend schonend bei Temperaturen bis 120°C getrocknet. Genauer wurde das Holz mit der Lösung in einem Vakuum-DruckKessel geflutet und zunächst ein Vakuum von 50-100 mbar (1h) und dann ein Druck von etwa 12 bar (2h) angelegt.

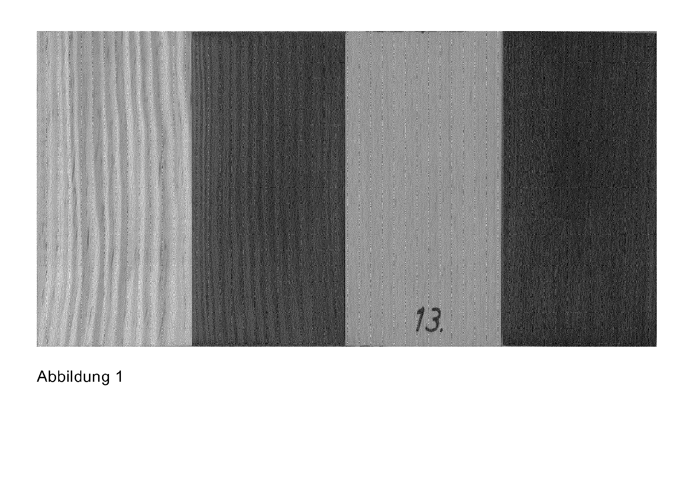

Die Proben wurden einige Tage bei Raumklima vorgetrocknet und die Temperatur dann langsam auf 120°C erhöht (Gesamtdauer der Trocknung: 1 Woche). Die Trocknung von Holzproben in größeren Abmessungen kann auch im Hochtemperaturtrockner (Heißdampfprozess) erfolgen. Hierbei ergab sich eine homogene Dunkelfärbung, siehe Abbildung 1. Dabei ist die Reihenfolge von links nach rechts wie folgt: Kiefer unbehandelt (1), Kiefer behandelt mit 25% PF-Harz + 1,0% Fe(II)-sulfat heptahydrat (2), Buche unbehandelt (3), Buche behandelt mit 25% PF-Harz + 1,0% Fe(II)-sulfat heptahydrat (4).

Beispiel 2:

**Künstliche Bewitterung von Holzproben behandelt mit PF-Harz unter Eisenzugabe**

Kiefern und Buchenholzproben wurden entsprechend Beispiel 1 modifiziert und einer künstlichen Bewitterung ausgesetzt. Folgende Proben wurden hergestellt und exponiert:

    (1) Buche (Kontrolle)
    (2) Buche 25% PF
    (3) Buche 25% PF + 1.0% $Fe^{2+}$
    (4) Buche 25% PF + 0.5% $Fe^{3+}$
    (5) Kiefer (Kontrolle)
    (6) Kiefer 25% PF + 1.0% $Fe^{2+}$
    (7) Kiefer 25% PF + 1.5% Tannin
    (8) Kiefer 25% PF + 1.5% Tannin + 0.5% $Fe^{2+}$

Die Proben wurden bis zu 12 Wochen nach der Norm ENv 927-6 in einem künstlichen Bewitterungsgerät (QUV, Q-Panel) bewittert. Ein Zyklus im Schnellbewitterungsgerät bestand aus (1) einer Kondensation bei 100% relativer Luftfeuchte, (2) 2.5h Bestrahlung mit UV-Licht (max. 340 nm) bei 60°C und (3) 30 Minuten Besprühen der Holzoberfläche mit kaltem Wasser. Die Schritte (2) und (3) wurden 48-mal wiederholt; dies entsprach einem Zyklus von einer Woche. Insgesamt zeigte sich, dass sich bei allen mit Phenolharz behandelten Proben die Verfärbung im Laufe der Bewitterung vertiefte. Dies ist wohl auf die Chromophorbildung in den Phenolharzen zurückzuführen. Bei reiner Wasserlagerung verändert sich die Farbe nicht; dies zeigt, dass die Eisenionen nicht ausgewaschen werden. Im Gegensatz dazu zeigten die Referenzproben ohne Harz eine Vergrauung bzw. Aufhellung des Holzes, die auf dem Abbau des natürlich vorkommenden Lignins an der Holzoberfläche beruht.

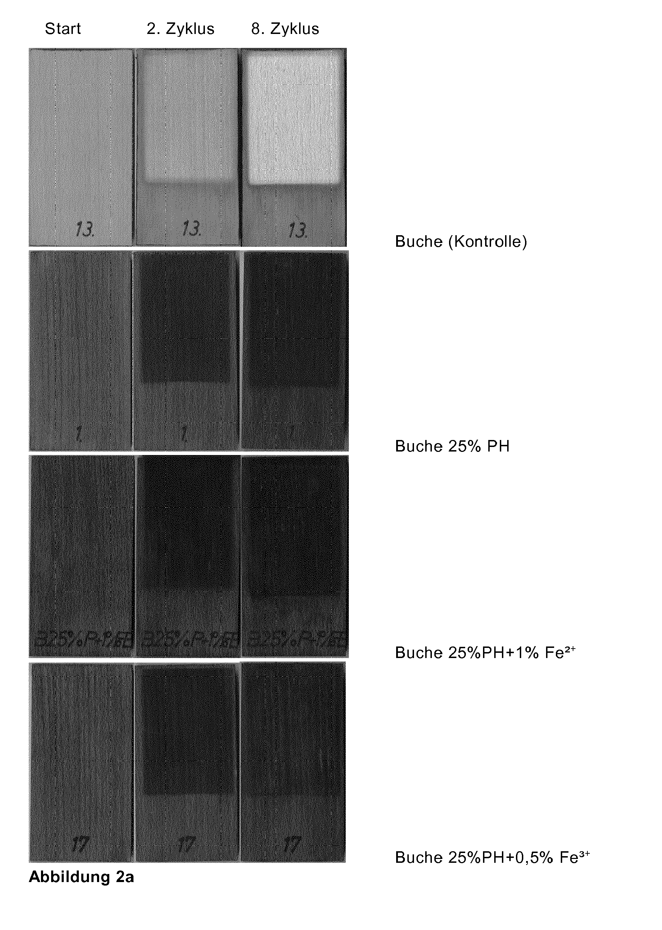

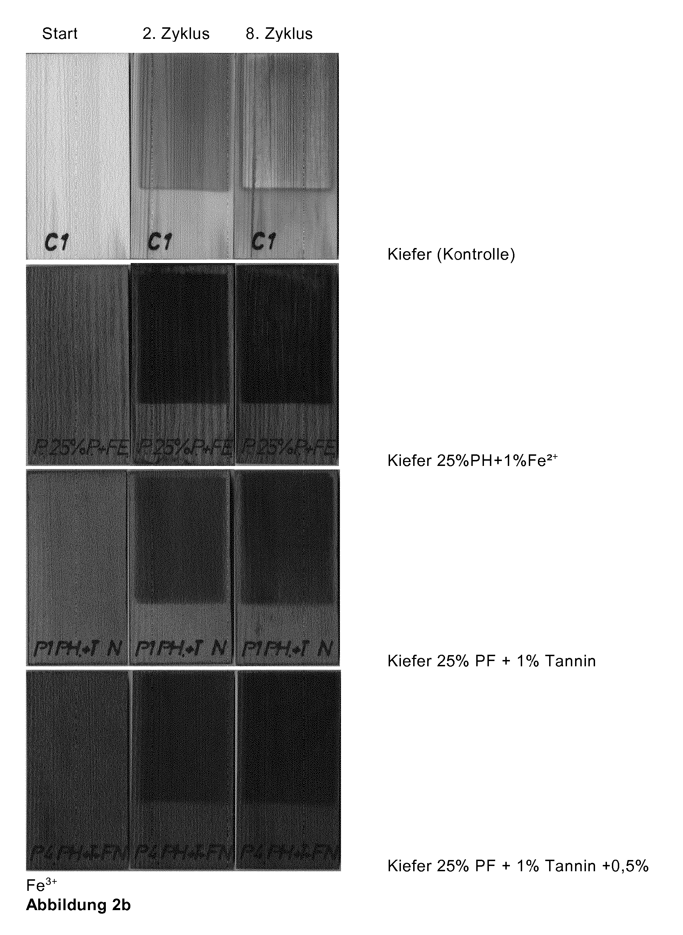

Wie Abbildung 2a,b zeigt waren Proben, die Eisenionen und Phenolharz enthielten, insgesamt dunkler als solche, die nur mit Phenolharz behandelt wurden. Nach der Bewitterung zeigten die Proben, die mit Eisenionen und Phenolharz behandelt wurden, weniger Farbunterschiede gegenüber ihren unbewitterten Bereichen als unbehandelte Proben bzw. als solche, die nur Phenolharz enthielten. Äquivalente Unterschiede zeigten Proben mit Phenolharz, Tannin und $Fe^{2+}$-Ionen gegenüber unbehandelten Proben bzw. gegenüber Proben, die nur mit Phenol und Tannin behandelt wurden.

**Beispiel 3:**

**Einfluss der Behandlung von PF-Harz in Kombination mit Eisenionen auf die Dimensionsstabilisierung (Quell-Schwindvergütung) von Holz**

Die Dimensionsstabilisierung des Holzes durch eine Behandlung mit PF-Harz werden relativ zur unbehandelten Holzprobe bestimmt. Dazu wurden die Dimensionen aller Proben im absolut trockenen Zustand gemessen und anschließend in demin. Wasser mit Hilfe eines Vakuum gesättigt, so dass die maximale Quellung eintrat. Anschließen werden die Dimensionen der Proben erneut vermessen und daraus wurde das Ausmaß der maximalen Quellung für die behandelten und unbehandelten Proben berechnet. Aus dem Verhältnis der maximalen Quellung der behandelten ($V_{beh}$) und unbehandelten Proben ($V_{unbeh}$) ergibt sich die Quell-Schwindvergütung, die international als "Anti-Shrink-Efficiency" (ASE) bezeichnet wird.

$$ASE = V_{beh} \times V_{unbeh} / V_{unbeh}$$

Die ASE wurde über 7 Zyklen bestimmt, die jeweils aus einer Wassersättigung und anschließende Trocknung bestanden.

Die Ergebnisse (Abbildung 2) zeigen, dass sich durch eine Behandlung mit 25%iger Phenolharzlösung eine ASE von etwa 60% erzielen lässt. Die hohe ASE ist bekannter Weise darauf zurückzuführen, dass das niedrigmolekulare PF-Harz in die Zellwand eindringt und so die (Rück)-Schwindung des Holzes reduziert. Eine Zugabe von Eisen-Ionen zur Phenolharzlösung veränderte die ASE nicht. Dies zeigt, dass die Fe-enthaltenden Lösungen genauso gut in die Zellwand des Holzes eindringen, wie die reine Phenolharzlösung. Der Molekülverbund des PF-Harzes in der Lösung vergrößert sich durch Fe-Ionenzugabe offensichtlich nicht.

Beispiel 4:

**Einfluss der Behandlung von PF-Harz in Kombination mit Eisenionen auf**

**das Sorptionsverhalten von Holz**

Zur Untersuchung der Sorptionseigenschaften wurden Buchen- und Kiefernholzproben gemäß Beispiel 3 modifiziert. Dabei ließen sich folgende Proben unterscheiden:

(1) Buche (Kontrolle)
(2) Buche 25% PF
(3) Buche 25% PF + 0.5% $Fe^{3+}$
(4) Kiefer (Kontrolle)
(5) Kiefer 25% PF
(6) Kiefer 25% PF + 0.5% $Fe^{3+}$

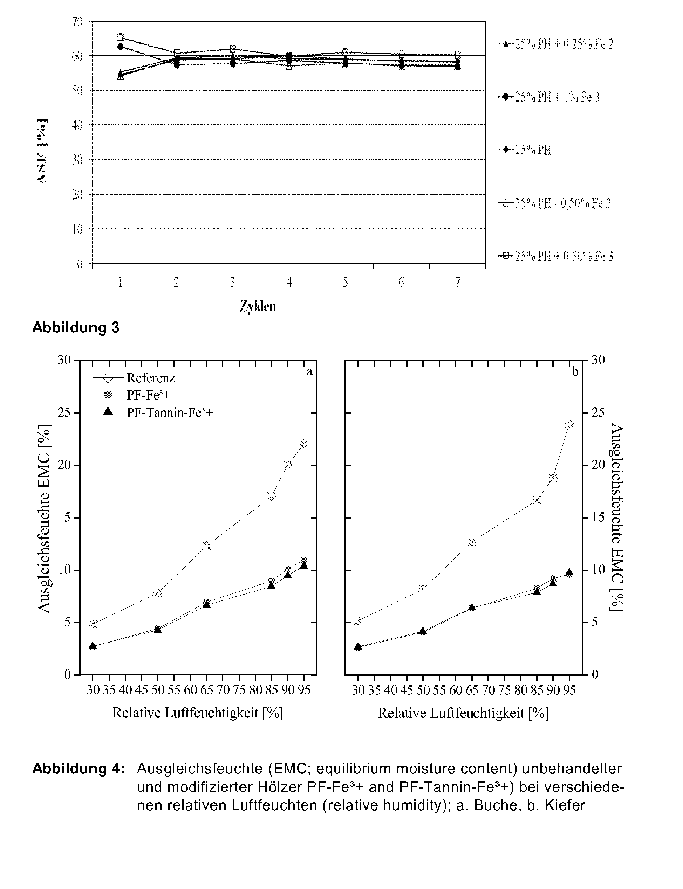

Die Proben wurden jeweils bei verschiedenen relativen Luftfeuchten (relative humidity) in einem Klimaschrank gelagert bis sich die Gleichgewichtsfeuchte (EMC; equilibrium moisture content) einstellte. Hierbei wurde die Gleichgewichtsfeuchte jeweils auf das Gewicht der Proben (unbehandelt) vor der Modifizierung bezogen. So wurde die in Abbildung 4 dargestellte Sorptionsisotherme erzeugt. Abbildung 4 zeigt eindeutig, dass alle durchgeführten Modifizierungen bei beiden Holzarten zu einer deutlichen Herabsetzung der Gleichgewichtsfeuchte führten. Hierbei war kein nennenswerter Unterschied zwischen den Behandlungen mit Phenolharz alleine und denen mit zusätzlichem Eisensalz zu erkennen. Die beobachtete Abnahme der Feuchtesorption führt im Allgemeinen zu einer höheren Dimensionsstabilität und einer höheren Resistenz gegenüber Pilzen als beim unbehandelten Holz.

**Patentansprüche**

1.   Verwendung von Metallionen zur Färbung von Holzprodukten, wobei diese Metallionen in Verbindung mit einem Harz mit einer Arylgruppe aufweisenden Komponente verwendet werden und wobei die Metallionen in Kombination mit dem Harz in Form einer Lösung verwendet werden.

2.   Verwendung nach Anspruch 1, wobei die Holzprodukte Holz oder Holzwerkstoffe sind.

3.   Verwendung nach Anspruch 1 oder 2, wobei das mindestens eine Harz mit einer Arylgruppe aufweisenden Komponente ein phenolhaltiges Harz, ein resorcinhaltiges Harz, ein Phenol-Melaminhaltiges Harz, ein Harnstoff-Melamin-phenolhaltiges Harz, tanninhaltiges Harz, ligninhaltiges Harz oder Mischungen hiervon ist.

4.   Verwendung nach einem der vorherigen Ansprüche, wobei die Metallionen in Kombination mit dem Harz in Form einer wässrigen Lösung verwendet werden.

5.   Verwendung nach einen der vorherigen Ansprüche, wobei die Metallionen in Form von Metallsalzen vorliegen.

6.   Verwendung nach Anspruch 5, wobei die Metallionen in Form von Metallsalzen als wasserlösliche Metallsalze vorliegen.

7.   Verwendung nach einen der vorherigen Ansprüche wobei die Metallionen ausgewählt sind aus Fe II, Fe III; Mn, wie Mn II, Mn III, Mn IV, Mn VI und Mn VII; Ni II; Co II; Co III; Cu II Metallionen.

8.   Verwendung nach einem der Ansprüche 1 bis 7, wobei das Metallsalz der Metallionen mit maximal 5 Gew.-% bezogen auf den Feststoff des Harzes verwendet wird, bevorzugt in einer Menge von 3 Gew.-% oder weniger bezogen auf den Feststoff des Harzes.

9.   Verwendung nach einem der Ansprüche 1 bis 8, wobei das Harz ein Phenol-Formaldehyd-Harz ist.

10.   Verwendung nach einem der Ansprüche 1 bis 9, wobei das mindestens eine Harz mit einer Arylgruppe aufweisende Komponente eine Mischung aus einem der genannten Harze mit Tanninen ist.

11.   Verwendung nach einem der Ansprüche 1 bis 10, wobei zusätzlich ein melaminhaltiges, melaminharnstoffhaltiges oder furanhaltiges Harz verwendet wird.

12.   Verfahren zur Färbung von Holz oder Holzwerkstoffen umfassend den Schritt des Ein- und/oder Aufbringens von Metallionen nach einem der vorherigen Ansprüche in und/ oder auf das Holz oder den Holzwerkstoff, und das Ein- und/oder Aufbringen eines Harzes nach einem der vorherigen Ansprüche in und/oder auf das Holz oder den Holzwerkstoff, weiterhin umfassend den Schritt des Aushärtens des Harzes bei einer Temperatur von bis zu 240°Celsius.

13.   Verfahren nach Anspruch 12 in einem Verfahren zur Herstellung eines Holzwerkstoffes, wobei die Metallionen nach einen der Ansprüche 1 bis 11 gleichzeitig, getrennt oder nacheinander mit dem Harz nach einem der Ansprüche 1 bis 11, auf die Holz-Zerkleinerungsprodukte zur Herstellung des Holzwerkstoffes aufgebracht werden und anschließend diese verpresst werden.

14.   Färbemittel für Holz oder Holzwerkstoffe umfassend Metallionen und Harze nach einem der Ansprüche 1 bis 11 zur Verwendung bei der Einfärbung von Holz oder Holzwerkstoffen.

15. Holz oder Holzwerkstoff herstellbar gemäß einem Verfahren nach einem der Ansprüche 12 bis 13 oder gemäß der Verwendung nach einem der Ansprüche 1 bis 11.

Abbildung 1

Start      2. Zyklus      8. Zyklus

Buche (Kontrolle)

Buche 25% PH

Buche 25%PH+1% Fe²⁺

Buche 25%PH+0,5% Fe³⁺

**Abbildung 2a**

Start    2. Zyklus    8. Zyklus

Kiefer (Kontrolle)

Kiefer 25%PH+1%Fe$^{2+}$

Kiefer 25% PF + 1% Tannin

Kiefer 25% PF + 1% Tannin +0,5% Fe$^{3+}$

**Abbildung 2b**

**Abbildung 3**

**Abbildung 4:** Ausgleichsfeuchte (EMC; equilibrium moisture content) unbehandelter und modifizierter Hölzer PF-Fe³+ and PF-Tannin-Fe³+) bei verschiedenen relativen Luftfeuchten (relative humidity); a. Buche, b. Kiefer

Europäisches Patentamt

European Patent Office

Office européen des brevets

**EUROPÄISCHER RECHERCHENBERICHT**

Nummer der Anmeldung

EP 15 15 2608

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DATABASE WPI<br>Week 200929<br>Thomson Scientific, London, GB;<br>AN 2009-H35684<br>XP002739704,<br>-& JP 2009 083451 A (KANEMATSU NISSAN NORIN KK) 23. April 2009 (2009-04-23)<br>* Zusammenfassung *<br>* Absatz [0021] *<br>----- | 1-8, 10-15 | INV.<br>C09D15/00<br>B27K3/16<br>B27K3/26<br>B27K3/52<br>B27K5/02 |
| X | DATABASE WPI<br>Week 197720<br>Thomson Scientific, London, GB;<br>AN 1977-35384Y<br>XP002739705,<br>& JP S52 44216 A (FUJI CHEM IND CO LTD)<br>7. April 1977 (1977-04-07)<br>* Zusammenfassung *<br>----- | 1-8, 10-15 | |
| X | DE 15 19 154 A1 (GLASURIT WERKE MAX WINKELMANN) 3. April 1969 (1969-04-03)<br>* Ansprüche 1,7; Beispiele 1-5 *<br>----- | 1-15 | |
| X | US 2010/303927 A1 (POMPEO MICHAEL P [US])<br>2. Dezember 2010 (2010-12-02)<br>* Ansprüche 1-4,7,12-14,18; Beispiele 1-3 *<br>----- | 1-7, 10-15 | RECHERCHIERTE SACHGEBIETE (IPC)<br>C09D<br>B27K |
| X | DE 33 44 973 A1 (SIMATUPANG MARULI H DR)<br>20. Juni 1985 (1985-06-20)<br>* Ansprüche 1-4,6-10,12 *<br>----- | 1-8, 10-15 | |
| X | GB 152 427 A (ROLAND EDGAR SLADE)<br>14. Oktober 1920 (1920-10-14)<br>* Seite 1, Zeile 61 - Seite 2, Zeile 25; Ansprüche 1-3 *<br>-----<br>-/-- | 1-7, 10-15 | |

Der vorliegende Recherchenbericht wurde für alle Patentansprüche erstellt

| Recherchenort | Abschlußdatum der Recherche | Prüfer |
|---|---|---|
| München | 20. Mai 2015 | Schmitt, Johannes |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 15 15 2608

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DATABASE WPI<br>Week 200560<br>Thomson Scientific, London, GB;<br>AN 2005-589166<br>XP002739706,<br>& RU 2 259 918 C1 (KHIMSINTEZ RES PRODN ASSOC STOCK CO)<br>10. September 2005 (2005-09-10)<br>* Zusammenfassung *<br>----- | 14,15 | |
| X | WO 95/06524 A2 (POLYMER WOOD PROCESSORS INC [US]) 9. März 1995 (1995-03-09)<br>* Ansprüche 7,12,23; Beispiel 6 *<br>----- | 14,15 | |
| X | DE 10 2011 001110 A1 (HAMBERGER INDUSTRIEWERKE GMBH [DE])<br>6. September 2012 (2012-09-06)<br>* Ansprüche 1-4,6,7 *<br>----- | 1-15 | |
| A | EP 0 186 458 A1 (MINI FOR NATURAL RESOURCES OF [AU])<br>2. Juli 1986 (1986-07-02)<br>* Ansprüche 1-12 *<br>----- | 1-15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 20. Mai 2015 | Schmitt, Johannes |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 15 2608

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-05-2015

| Im Recherchenbericht angeführtes Patentdokument | Datum der Veröffentlichung | Mitglied(er) der Patentfamilie | Datum der Veröffentlichung |
|---|---|---|---|
| JP 2009083451 A | 23-04-2009 | KEINE | |
| JP S5244216 A | 07-04-1977 | KEINE | |
| DE 1519154 A1 | 03-04-1969 | DE 1519154 A1<br>FR 1378436 A | 03-04-1969<br>13-11-1964 |
| US 2010303927 A1 | 02-12-2010 | KEINE | |
| DE 3344973 A1 | 20-06-1985 | KEINE | |
| GB 152427 A | 14-10-1920 | KEINE | |
| RU 2259918 C1 | 10-09-2005 | KEINE | |
| WO 9506524 A2 | 09-03-1995 | AU 7527294 A<br>CA 2170603 A1<br>EP 0724487 A1<br>US 5461108 A<br>US 5612142 A<br>WO 9506524 A2 | 22-03-1995<br>09-03-1995<br>07-08-1996<br>24-10-1995<br>18-03-1997<br>09-03-1995 |
| DE 102011001110 A1 | 06-09-2012 | KEINE | |
| EP 0186458 A1 | 02-07-1986 | KEINE | |

EPO FORM P0461

Für nähere Einzelheiten zu diesem Anhang : siehe Amtsblatt des Europäischen Patentamts, Nr.12/82